# EUROPÄISCHE PATENTANMELDUNG

(11) **EP 1 038 699 A2**
(43) Veröffentlichungstag der Anmeldung: **27.09.2000**
(21) Anmeldenummer: 00105419.6
(22) Anmeldetag: 15.03.2000
(51) Int. Cl.: B60C 25/132

(54) **Vorrichtung zur Montage und/oder Demontage mindestens eines Reifens auf eine Radfelge bzw. von einer Radfelge**

(30) Priorität: 22.03.1999 DE 29905250 U
(71) Anmelder: WEILNHAMMER MASCHINENBAU GMBH, D-84405 Dorfen (DE)
(72) Erfinder: Müller, Josef, 84427 St. Wolfgang (DE)
(74) Vertreter: Schieschke, Klaus, Dipl.-Ing.

(57) **Zusammenfassung**

Vorrichtung zur Montage und/oder Demontage mindestens eines Reifens auf eine Radfelge bzw. von einer Radfelge, mit einem Gestell 1, an welchem eine Haltevorrichtung 2 für die Radfelge 50 und mindestens einem Montagewerkzeug 3 für den Reifen angeordnet sind, wobei das Gestell 1 auf einem Basisteil 5 befestigt ist, welches gegenüber einem Boden 10 eines Fahrzeuges zumindest annähernd horizontal verschiebbar und/oder verschwenkbar ist, wobei an dem Gestell 1 ein höhenverstellbares Gehäuse 12 mit einer Antriebseinheit 15 für die Haltevorrichtung 2 und das Montagewerkzeug 3 gelagert ist, und wobei an dem Gehäuse 12 ein als Haltevorrichtung 2 für die Radfelge 50 ausgebildeter Spannteller 7 und das Montagewerkzeug 3 befestigbar und mit der Antriebseinheit 15 verbindbar sind.

## Beschreibung

Die Erfindung bezieht sich auf eine Vorrichtung zur Montage und/oder Demontage mindestens eines Reifens auf eine Radfelge bzw. von einer Radfelge, mit einem Gestell, an welchem eine Haltevorrichtung für die Radfelge und mindestens einem Montagewerkzeug für den Reifen angeordnet sind.

Als allgemeiner Stand der Technik sind bereits derartige Vorrichtungen bekannt, welche beispielsweise zur Montage bzw. Demontage von LKW-Reifen an einer Radfelge bzw. von einer Radfelge dienen. Diese Vorrichtungen sind infolge ihres erheblichen baulichen Aufwandes stationär angeordnet, so dass die entsprechenden LKW-Reifen und die Felgen angeliefert werden müssen. Hierdurch ergibt sich ein hoher Zeit- und Kostenaufwand.

Weiterer allgemein bekannter Stand der Technik geht davon aus, dass Vorrichtungen eingesetzt werden, welche auf einem Spezialfahrzeug angeordnet sind. Dieses Spezialfahrzeug bedingt wiederum einen hohen Kostenaufwand und ist lediglich für den ganz speziellen vorgenannten Verwendungszweck einsetzbar.

Entsprechend liegt der vorliegenden Erfindung die Aufgabe zugrunde, eine Vorrichtung der eingangs genannten Art zu schaffen, welche bei einfachem Aufbau eine höhere Flexibilität ermöglicht.

Diese Aufgabe wird erfindungsgemäß dadurch gelöst, dass das Gestell auf einem Basisteil befestigt ist, welches gegenüber einem Boden eines Fahrzeuges zumindest annähernd horizontal verschiebbar und/oder verschwenkbar ist, dass an dem Gestell ein höhenverstellbares Gehäuse mit einer Antriebseinheit für die Haltevorrichtung und das Montagewerkzeug gelagert ist und dass an dem Gehäuse ein als Haltevorrichtung für die Radfelge ausgebildeter Spannteller und das Montagewerkzeug befestigbar und mit der Antriebseinheit verbindbar sind. Hierdurch ergibt sich der Vorteil einer mobilen Vorrichtung zur Montage bzw. Demontage mindestens eines Reifens auf eine Radfelge bzw. von einer Radfelge, welche insbesondere zum Einsatz bei LKW-Reifen gedacht ist. Diese erfindungsgemäße Vorrichtung lässt sich auf einem Fahrzeug, bzw. einem Transporter oder einem Anhänger anbringen und mobil zwischen verschiedenen Orten bewegen, so dass eine erhebliche Zeit- und Kostenreduzierung ermöglicht wird.

Bei der Montage eines Reifens auf eine an einem Spannteller als Haltevorrichtung befestigte Radfelge wird der Spannteller arretiert und das Montagewerkzeug angetrieben. Bei der Demontage eines Reifens von einer auf dem Spannteller befestigten Radfelge wird andererseits der Spannteller angetrieben, wobei mindestens eine an dem Gestell befestigte, verschiebbare, den Reifen beaufschlagende Abdrückrolle starr angeordnet ist.

Über Zwischenelemente können die entsprechenden Antriebe für den Spannteller bzw. für die Abdrückrolle funktionsrichtig mit der Antriebseinheit verbunden werden.

Der Spannteller kann über Zwischenelemente an verschiedene Felgengrößen anpassbar sein.

Über die Steuereinheit kann die Betätigung von Kolbenzylindereinheiten für die Bewegung des Gehäuses und für die Bewegung der Abdrückrollen zur Montage bzw. Demontage eines Reifens auf einer Felge bzw. von einer Felge steuerbar sein.

Vorteilhafte Weiterbildungen ergeben sich aus den Unteransprüchen.

Die Erfindung wird nachfolgend anhand eines in der Zeichnung dargestellten Ausführungsbeispiels näher beschrieben. In der Zeichnung zeigen:
- Fig. 1: eine schematische Seitenansicht der erfindungsgemäßen Vorrichtung;
- Fig. 2: eine perspektivische Ansicht der Führung des Gehäuses nach Fig. 1;
- Fig. 3: eine weitere schematische Seitenansicht der erfindungsgemäßen Vorrichtung mit ausgefahrenen Stützen, teils gebrochen;
- Fig. 4: einen Querschnitt durch eine Profilschiene;
- Fig. 5a und 5b: eine Seitenansicht und Draufsicht von Laufrollen;
- Fig. 6: einen Schnitt durch die Antriebseinheit zur Bewegung des Montagewerkzeuges;
- Fig.6a: eine Ansicht gemäß VIa in Fig. 6;
- Fig. 6b: einen Schnitt gemäß der Linie VIb-VIb in Fig. 6;
- Fig. 7: eine Seitenansicht des Gehäuses mit montierten Abdrückrollen, teils gebrochen;
- Fig. 8: eine Seitenansicht einer Abdrückrolle mit Antrieb in Einzeldarstellung;
- Fig. 9: eine Draufsicht auf zwei Abdrückrollen mit Antrieb;
- Fig. 10: die Antriebseinheit für das Spannelement während der Betätigung der Abdrückrollen, im Mittelschnitt;
- Fig. 10a: einen Schnitt nach Linie Xa-Xc in Fig. 10.

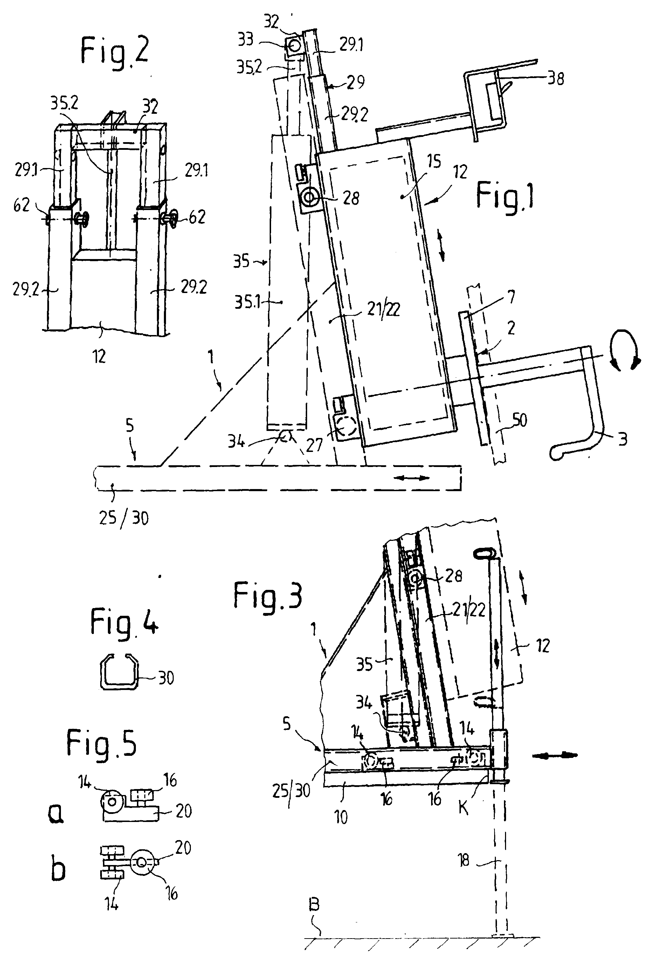

In Fig. 1 bzw. 3 ist eine Vorrichtung zur Montage bzw. Demontage mindestens eines Reifens an einer Radfelge 50 bzw. von einer Radfelge dargestellt. Es findet ein Gestell 1 Anwendung, an welchem eine Haltevorrichtung 2 für die Radfelge 50 und ein Montagewerkzeug 3 für den nicht näher dargestellten Reifen angeordnet sind.

Das Gestell 1 ist auf einem Basisteil 5 befestigt, welches gegenüber einem Boden 10 (Fig. 3) eines nicht näher dargestellten Fahrzeuges zumindest horizontal verschiebbar und/oder verschwenkbar ist. Im vorliegenden Fall lässt sich das Basisteil 5 in Pfeilrichtung hin und her schieben, wie insbesondere Fig. 1 und Fig. 3 zu entnehmen ist.

An dem Gestell 1 ist ein höhenverstellbares Gehäuse 12 mit einer Antriebseinheit 15 für die Haltevorrichtung 2 und das Montagewerkzeug 3 gelagert. Weiterhin ist an dem Gehäuse 12 ein als Haltevorrichtung 2 für die Radfelge 50 ausgebildeter Spannteller 7 und das Montagewerkzeug 3 befestigbar. Wahlweise kann hierbei der Spannteller 7 oder das Montagewerkzeug 3 mit der Antriebseinheit 15 verbunden werden, je nach dem, ob eine Montage eines Reifens auf der Radfelge 50 oder eine Demontage eines Reifens von der Radfelge 50 vorgesehen ist.

Das Basisteil 5 ist als Schliffen 25 nach Fig. 1 und 3 ausgebildet, wobei der Schliffen 25 mindestens eine Profilschiene 30 nach Fig. 4 aufweist, in der horizontal und vertikal auf einem Lager 20 angeordnete Laufrollen 14 und 16 nach Fig. 5a und 5b geführt sind. Durch diese Laufrollen 14 und 16 besteht die Möglichkeit, das Basisteil 5, d. h. den Schliffen 25 über eine Ladekante K eines Bodens 10 eines Fahrzeuges herauszuschieben bzw. zu ziehen. Befindet sich dann das gesamte Gestell 1 in der Arbeitsposition, so sind herausfahrbare Stützen 18 vorgesehen, durch welche die gesamte Einheit in der vorgenannten Position ab-. gestützt ist.

Das höhenverstellbare Gehäuse 12 ist gemäß Fig. 1 mit einer Kolbenzylindereinheit 35 verbunden und in Pfeilrichtung höhenverstellbar. Zu diesem Zweck weist das Gestell 1 zwei schräg nach oben ragende, an dem Schliffen 25 befestigte Profilschienen 21 und 22 auf, in welchen an dem Gehäuse 12 befestigte Laufrollen 27 und 28 geführt sind. Diese Laufrollen 27 und 28 können analog der Konstruktion der Laufrollen 14 und 16 nach Fig. 5a und 5b gestaltet sein.

Aus Fig. 1 geht weiterhin hervor, dass die Kolbenzylindereinheit 35 jeweils über Gelenke 33 und 34 mit dem Gestell 1 und mit dem Gehäuse 12 verbunden ist. Der Zylinder 35.1 der im Wesentlichen horizontal heraufragenden Kolbenzylindereinheit 35 ist hierbei im Bereich des Schlittens 25 über das erste Gelenk 34 mit dem Gestell 1 verbunden. Die Kolbenstange 35.2 der Kolbenzylindereinheit 35 ist ihrerseits über das zweite Gelenk 33 und mindestens eine Hubstange 29 an der Oberseite des Gehäuses 12 befestigt.

Gemäß Fig. 2 kann die Hubstange 29 aus teleskopierbaren Elementen 29.1 und 29.2 bestehen, so dass die gesamte Einheit zur Verkürzung der Bauhöhe teilweise ineinander gesteckt werden kann. In diesem Fall sind nach Fig. 2 Rastelemente 62 vorgesehen, welche in entsprechende Öffnungen der Teleskopierelemente 29.1 eingreifen, so dass der Abstand der oberen Teleskopierstange 29.1 gegenüber der unteren Teleskopierstange 29.2 verringert werden kann.

Die beiden oberen Teleskopierstangen 29.1 sind durch ein Querjoch 32 miteinander verbunden, an dem sich das Gelenk 33 befindet, das seinerseits mit der Kolbenstange 35.2 der Kolbenzylindereinheit 35 verbunden ist.

Insbesondere aus Fig. 1 geht hervor, dass die aus einem nicht näher dargestellten Motor und einem nicht näher dargestellten Getriebe bestehende Antriebseinheit 15 innerhalb des Gehäuses 12 angeordnet ist und mit einer Steuereinheit 38 in Wirkverbindung steht, welche sich vorzugsweise oberhalb des Gehäuses 12 befindet.

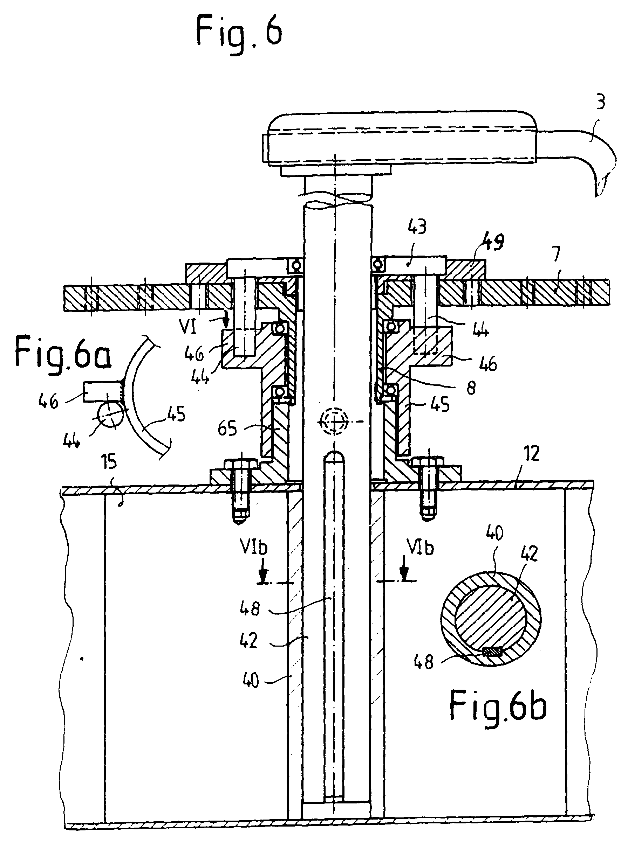

Bei der Montage eines Reifens auf die auf dem Spannteller 7 befestigte Radfelge 50 ist der Spannteller 7 arretiert und das Montagewerkzeug 3 dreht sich gemäß Fig. 1 in Pfeilrichtung. Um diese Bewegung durchzuführen, sind nach Fig. 6 Zwischenelemente zwischen einer schematisch dargestellten Abtriebswelle 40 des Getriebes und dem Montagewerkzeug 3 vorhanden. Diese Zwischenelemente bestehen aus einer Antriebswelle 42, welche nach Fig. 6b über eine Nut-Feder-Verbindung 48 drehfest mit der Antriebwelle 40 des Getriebes verbunden ist.

Weiterhin findet eine Rastscheibe 43 Anwendung, welches mindestens einen Rastzapfen 44 aufweist, wobei im vorliegenden Fall zwei Rastzapfen 44 vorhanden sind. Diese Rastzapfen 44 beaufschlagen nach Fig. 6a jeweils einen Arretierflügel 46 einer Lagerhülse 45, wobei diese Rastzapfen 44 den Spannteller 7 durchsetzen. Die Lagerhülse 45 ist ihrerseits drehfest arretiert.

Aus Fig. 6 ist weiter erkennbar, dass an dem Gehäuse ein die Antriebswelle 42 für das Montagewerkzeug 3 umgebendes Lager 65 befestigt ist, welches seinerseits zur Halterung der Lagerhülse 45 dient. In dieser Lagerhülse 45 ist seinerseits der Spannteller 7 mit einem Hohlzapfen 8 vorzugsweise über mehrere Kugellager gelagert.

Wird nun mit Hilfe der Steuervorrichtung 38 die Antriebseinheit 15 in Bewegung gesetzt, so wird über die Abtriebswelle 40 des Getriebes die Antriebswelle 42 gedreht, wodurch sich das Montagewerkzeug 3 dreht und eine Montage eines Reifens auf der Radfelge 50 bewirkt. Diese Radfelge 50 ist an dem Spannteller 7 über an sich bekannte Zwischenelemente befestigt. Durch die Rastscheibe 43 mit den Rastzapfen 44 und die drehfest arretierte Lagerhülse 45 ergibt sich, dass damit auch der Spannteller 7 undrehbar gehalten ist.

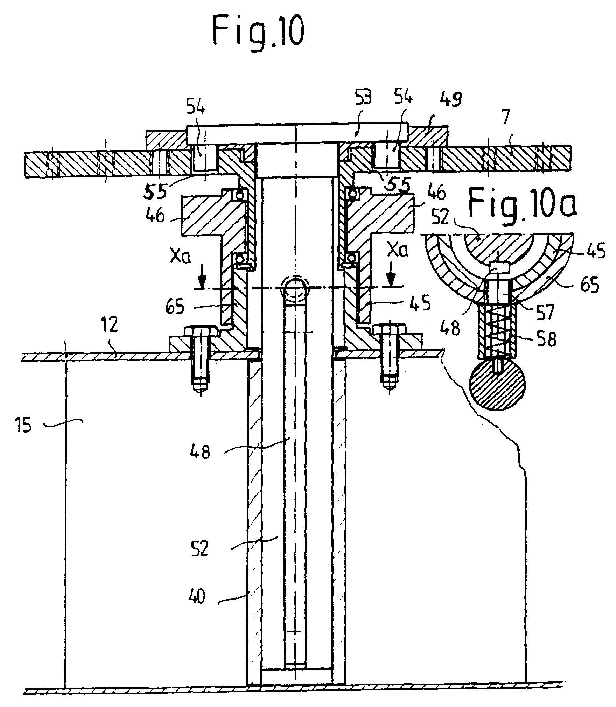

Die Arretierung der Lagerhülse 45 kann beispielsweise dadurch erfolgen, dass nach Fig. 10a ein Rastelement 57, welches von einer Feder 58 beaufschlagt wird, in eine entsprechende Ausnehmung der Lagerhülse 45 eingreift und somit das Lager 65 drehfest mit der Lagerhülse 45 verbindet.

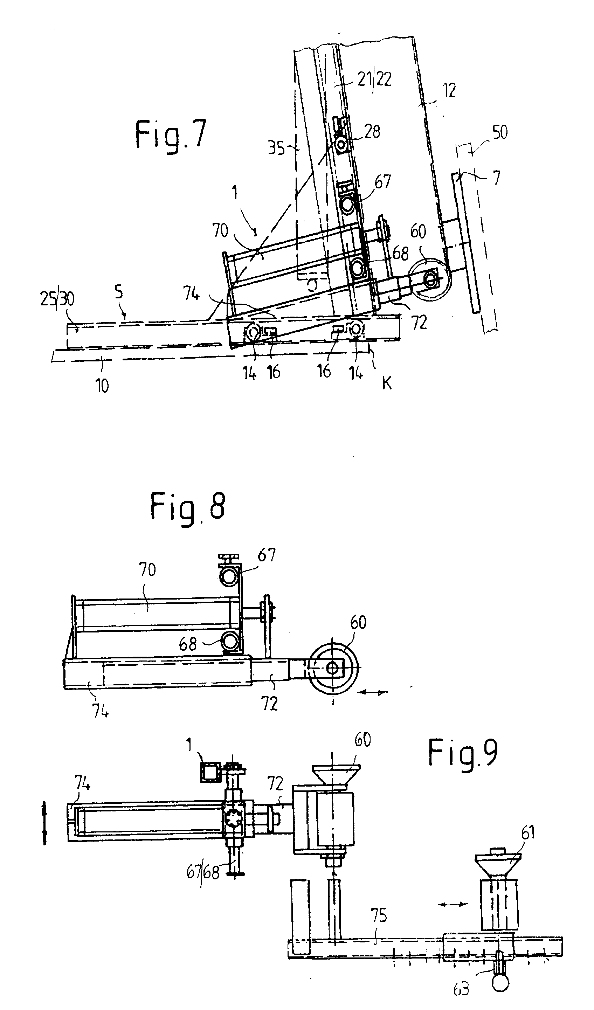

Soll eine Demontage eines Reifens von einer Radfelge 50 stattfinden, so kann mindestens eine Abdrückrolle 60 nach Fig. 7 bis 9 Anwendung finden. Hierbei ist bei der Demontage des Reifens von der auf dem Spannteller 7 befestigten Radfelge 50 der Spannteller 7 angetrieben und die an dem Gestell 1 befestigte, längs und quer verschiebbare, den Reifen beaufschlagende Abdrückrolle 60 ist starr angeordnet.

Aus Fig. 7 bis 9 geht hervor, dass die Abdrückrolle 60 über eine Kolbenzylindereinheit 70 in Pfeilrichtung hin und her bewegt werden kann. Es ist auch möglich die Abdrückrolle 60 ohne die Kolbenzylindereinheit 70 allein zu verschieben. Weiterhin ist erkennbar, dass die Abdrückrolle 60 an einer Schiebeführung 72 befestigt ist, welche innerhalb eines Lagerelements 74 gelagert ist. Aus Fig. 9 geht hervor, dass dieses Lagerelement 74 seinerseits über Querstreben 67 und 68 an dem Gestell 1 befestigt ist. Über Führungen kann das Lagerelement 74 entlang der Querstreben 67 und 68 quer verschoben werden.

Mit Hilfe der Kolbenzylindereinheit 70 lässt sich damit die Abdrückrolle 60 gemäß Fig. 7 bzw. 8 in Pfeilrichtung hin und her bewegen und so gegen einen nicht näher dargestellten Reifen drücken, welcher von der Radfelge 50 zu demontieren ist. Eine Querpositionierung ist über die Querstreben 67 und 68 durchführbar.

Nach Fig. 9 besteht auch die Möglichkeit, dass an der Schiebeführung 72 über eine Haltestange 75 eine zweite Abdrückrolle 61 angeordnet werden kann. Hierbei ist die zweite Abdrückrolle 61 über mindestens ein Rastelement 63 auf der Haltestange 75 in verschiedenen Positionen arretierbar, so dass diese zweite Abdrückrolle in Pfeilrichtung nach Fig. 9 funktionsrichtig gegenüber einem zu demontierenden Reifen verschoben werden kann.

Um die erfindungsgemäße Vorrichtung zur Montage bzw. Demontage verschiedener Reifengrößen bzw. verschiedener Radfelgen einsetzen zu können, kann der Spannteller über Zwischenelemente z. B. über Stufenteller 49, an die verschiedenen Felgengrößen angepasst werden.

Durch die besonders gestaltete Form des Spanntellers 7 besteht die Möglichkeit, dass auch Radfelgen aus Aluminium beschädigungsfrei mit entsprechenden Reifen verbunden werden können. Weiterhin lassen sich auch PKW-Radfelgen mit entsprechenden Reifen verbinden. In diesem Fall ist der Montagearm 3 an dem Gehäuse 12 feststehend angeordnet, während sich über den Spannteller 7 die Radfelge 50 entsprechend dreht.

Durch die erfindungsgemäße Vorrichtung wird eine mobile Serviceeinheit geschaffen, wobei das Gestell 1 auf einfache Weise gegenüber dem Boden 10 eines Fahrzeuges herausgezogen werden kann. Diese mobile Serviceeinheit kann beispielsweise auf einem an sich bekannten Transporter oder einem Hänger angeordnet sein, wobei letztendlich auch die Möglichkeit besteht, diese Serviceeinheit an einer stationären Stelle anzuordnen.

## Patentansprüche

1. Vorrichtung zur Montage und/oder Demontage mindestens eines Reifens auf eine Radfelge bzw. von einer Radfelge,
mit einem Gestell (1), an welchem eine Haltevorrichtung (2) für die Radfelge (50) und mindestens einem Montagewerkzeug (3) für den Reifen angeordnet sind,
**dadurch gekennzeichnet,**
dass das Gestell (1) auf einem Basisteil (5) befestigt ist, welches gegenüber einem Boden (10) eines Fahrzeuges zumindest annähernd horizontal verschiebbar und/oder verschwenkbar ist,
dass an dem Gestell (1) ein höhenverstellbares Gehäuse (12) mit einer Antriebseinheit (15) für die Haltevorrichtung (2) und das Montagewerkzeug (3) gelagert ist, und
dass an dem Gehäuse (12) ein als Haltevorrichtung (2) für die Radfelge (50) ausgebildeter Spannteller (7) und das Montagewerkzeug (3) befestigbar und mit der Antriebseinheit (15) verbindbar sind.

2. Vorrichtung nach Anspruch 1, **dadurch gekennzeichnet,** dass das Basisteil (5) als Schlitten (25) ausgebildet ist, welcher über Laufrollen (14, 16) gegenüber dem Boden (10) des Fahrzeuges bewegbar ist.

3. Vorrichtung nach Anspruch 2, **dadurch gekennzeichnet,** dass der Schlitten (25) mindestens eine Profilschiene (30) aufweist, in welcher die horizontal und vertikal angeordneten Laufrollen (14, 16) geführt sind.

4. Vorrichtung nach einem oder mehreren der vorhergehenden Ansprüche, **dadurch gekennzeichnet**, dass der Schlitten (25) mit dem Gestell (1) über eine Ladekante (K) des Fahrzeugs herausbewegbar und abstützbar ist und dass das auf dem Gestell (1) angeordnete, höhenverstellbare Gehäuse (12) bis in den Bodenbereich (B) absenkbar ist.

5. Vorrichtung nach Anspruch 1 und 4, **dadurch gekennzeichnet,** dass das Gehäuse (12) über mindestens eine Kolbenzylindereinheit (35) höhenverstellbar ist.

6. Vorrichtung nach Anspruch 5, **dadurch gekennzeichnet,** dass das Gestell (1) zwei schräg nach oben ragende, an dem Schliffen (25) befestigte Profilschienen (21,22) aufweist, in welchen mit dem Gehäuse (12) verbundene Laufrollen (27, 28) geführt sind.

7. Vorrichtung nach Anspruch 5 und 6, **dadurch gekennzeichnet,** dass die Kolbenzylindereinheit (35) jeweils über Gelenke (33, 34) mit dem Gestell (1) und dem Gehäuse (12) verbunden ist.

8. Vorrichtung nach Anspruch 7, **dadurch gekennzeichnet,** dass der Zylinder (35.1) der im Wesentlichen horizontal aufragenden Kolbenzylindereinheit (35) im Bereich des Schlittens (25) über das erste Gelenk (34) am Gestell (1) befestigt ist und dass die Kolbenstange (35.2) über das zweite Gelenk (33) und mindestens eine Hubstange (29) an der Oberseite des Gehäuses (12) befestigt ist.

9. Vorrichtung nach Anspruch 8, **dadurch gekennzeichnet,** dass die Hubstange (29) aus Teleskopierelementen (29.1, 29.2) besteht.

10. Vorrichtung nach einem oder mehreren der vorhergehenden Ansprüche, **dadurch gekennzeichnet,** dass die aus Motor und Getriebe bestehende Antriebseinheit (15) innenseitig des Gehäuses (12) angeordnet und mit einer Steuereinheit (38) verbunden ist.

11. Vorrichtung nach Anspruch 1 und 10, **dadurch gekennzeichnet,** dass eine Abtriebswelle (40) des Getriebes über Zwischenelemente mit dem Spannteller (7) oder dem Montagewerkzeug (3) verbindbar ist.

12. Vorrichtung nach Anspruch 11, **dadurch gekennzeichnet,** dass bei Montage eines Reifens auf eine an dem Spannteller (7) befestigte Radfelge (50) der Spannteller (7) arretiert und das Montagewerkzeug (3) angetrieben ist.

13. Vorrichtung nach Anspruch 11, **dadurch gekennzeichnet,** dass bei Demontage eines Reifens von einer auf dem Spannteller (7) befestigten Radfelge (50) der Spannteller (7) angetrieben und mindestens eine an dem Gestell (1) befestigte, verstellbare, den Reifen beaufschlagende Abdrückrolle (60, 61) starr angeordnet ist.

14. Vorrichtung nach Anspruch 11 und 12, **dadurch gekennzeichnet,** dass die Zwischenelemente eine mit dem Getriebe verbundene Antriebswelle (42) für das Montagewerkzeug (3), eine Rastscheibe (43) mit mindestens einem Rastzapfen (44) und eine mit mindestens einem Arretierflügel (46) versehene Lagerhülse (45) aufweisen, wobei die Rastzapfen (44) den Spannteller (7) durchsetzen und an der drehfest fixierten Lagerhülse (45) arretieren (Fig. 6).

15. Vorrichtung nach Anspruch 11 und 13, **dadurch gekennzeichnet,** dass die Zwischenelemente eine mit dem Getriebe verbundene Antriebswelle (52) für den Spannteller (7) und eine mit der Antriebswelle (42) verbundene Antriebsscheibe (53) mit Zapfen (54) aufweisen, wobei die Zapfen (54) in Aussparungen (55) des Spanntellers (7) einlagerbar sind (Fig. 10).

16. Vorrichtung nach Anspruch 14 oder 15, **dadurch gekennzeichnet,** dass an dem Gehäuse (12) ein die Antriebswelle (42) für das Montagewerkzeug (3) bzw. die Antriebswelle (52), für den Spannteller (7) umgebendes Lager (65) befestigt ist, welches zur Halterung der Lagerhülse (45) dient.

17. Vorrichtung nach Anspruch 16, **dadurch gekennzeichnet,** dass in der Lagerhülse (45) der Spannteller (7) gelagert ist.

18. Vorrichtung nach Anspruch 16, **dadurch gekennzeichnet,** dass die Lagerhülse (45) über mindestens ein federbeaufschlagtes Rastelement (57) in dem Lager (65) arretierbar ist.

19. Vorrichtung nach Anspruch 13, **dadurch gekennzeichnet** dass die Abdrückrolle (60) über eine Kolbenzylindereinheit (70) gegenüber dem Gestell (1) hin und her bewegbar ist.

20. Vorrichtung nach Anspruch 19, **dadurch gekennzeichnet,** dass die Abdrückrolle (60) an einer Schiebeführung (72) befestigt ist, welche innerhalb eines gestellfesten Lagerelements (74) gelagert ist, wobei das Lagerelement (74) Querverschiebeelemente aufweist.

21. Vorrichtung nach Anspruch 19 und 20, **dadurch gekennzeichnet,** dass an der Schiebeführung (72) über eine Haltestange (75) eine zweite Abdrückrolle (61) anordenbar ist.

22. Vorrichtung nach Anspruch 21, **dadurch gekennzeichnet,** dass die zweite Abdrückrolle (61) über mindestens ein Rastelement (63) auf der Haltestange (75) in verschiedenen Positionen arretierbar ist.

23. Vorrichtung nach einem oder mehreren der vorhergehenden Ansprüche, **dadurch gekennzeichnet,** dass der Spannteller (7) über Zwischenelemente an verschiedene Felgengrößen anpassbar ist.

24. Vorrichtung nach Anspruch 10, **dadurch gekennzeichnet,** dass über die Steuereinheit (38) die Betätigung der Kolbenzylindereinheiten (35; 70) und der Antriebseinheit (15) zur Montage und/oder Demontage mindestens eines Reifens auf die Radfelge (50) bzw. von der Radfelge (50) steuerbar ist.
